# EUROPEAN PATENT APPLICATION

(11) **EP 1 911 727 A1**
(43) Date of publication of application: **16.04.2008**
(21) Application number: 07016823.2
(22) Date of filing: 28.08.2007
(51) Int. Cl.: C03B 19/02

(54) **Method for producing glass and device for shaping glass**

(30) Priority: 10.10.2006 JP 2006276120
(71) Applicant: Ohara Inc., Sagamihara-shi Kanagawa 229-1186 (JP)
(72) Inventor: Goto, Naoyuki, Sagamihara-shi Kanagawa 229-1186 (JP); Sato, Naoto, Sagamihara-shi Kanagawa 229-1186 (JP); Kishi, Takayuki, Sagamihara-shi Kanagawa 229-1186 (JP)
(74) Representative: Maiwald Patentanwalts GmbH

(57) **Abstract**

It is an object of the present invention to provide a method for producing glass in which the temperature distribution between around a central portion and around a side wall in the shaping mold is regulated within a range of ±150°C to produce large-size glass, and to provide a device for shaping glass used in the method for producing glass.

The object may be attained by carrying out a step of flowing the molten glass (3) in a melting furnace (2), through a pipe to which a heat-insulating member (7) is fixed to prevent the heat dissipation of the molten glass, into the shaping mold (5) covered with a low heat-conductive member (6), and a step of maintaining the distance between the lower portion of the heat-insulating member and the liquid surface of the molten glass.

## Description

This application is based on and claims the benefit of priority from Japanese Patent Application No. 2006-276120, filed on 10 October 2006, the content of which is incorporated herein by reference.

### BACKGROUND OF THE INVENTION

### Field of the Invention

The present invention relates to a method for producing glass in which the temperature distribution of molten glass can be regulated within a range of ±150°C from heat-molding the glass to cooling until vitrification, and a device for shaping glass used in the method for producing glass.

### Related Art

In recent years, liquid crystal technology and plasma display technology, etc. have been progressed, and thus large-screen liquid crystal panels, etc. have been developed and widely used in various fields; therefore, the needs for large-size glass have been expanding rapidly. In addition, image quality and resolution are important for mirror substrates of astronomical telescopes, etc., the needs for large-size glass that is thermally stable such that its quality etc. is free from fluctuation due to environmental conditions have been expanding rapidly.

However, there have been such problems in molding large-size glass that the temperature difference between around the central portion and around the side wall of the molten glass becomes larger when molding such large-size glass, which causing cracks in the glass during molding, and the difference of thermal history during a cooling step for vitrification tends to cause a heterogeneous phase. It is generally said that the temperature difference (temperature distribution) above ±150°C between the site around the central portion and the site around the side walls of the molten glass of shaping molds causes cracks, etc. during molding.

In order to solve the problems described above, for example, Japanese Unexamined Patent Application, Publication No. 2006-117525 proposes a method for molding large-size glass in which a molten glass material is cast at least at a rate of 50 kg/min into a metal mold that is lined with a ceramic insulator.

The method for molding large-size glass described in Japanese Unexamined Patent Application, Publication No. 2006-117525 described above may form an intended shape of large-size glass. However, it is difficult to suppress the temperature distribution of molten glass within a range of ±150°C in the course of cooling until vitrification, and thus the problematic tendency to cause a heterogeneous phase in molded glass bodies has not been solved yet.

The present invention has been made to solve the problems described above, and it is an object of the present invention to provide a method for producing glass in which the temperature distribution of molten glass is regulated within a range of ±150°C between around a central portion, around a bottom face, and around a side wall of a shaping mold to produce large-size glass, and to provide a device for shaping glass used in the method for producing glass.

### SUMMARY OF THE INVENTION

The present inventors have investigated thoroughly to solve the problems described above, and consequently have found that the temperature distribution of molten glass can be regulated within ±150°C between around the central portion and around the side wall of a shaping mold in the course of cooling until vitrification, by way of flowing the molten glass through a flow-out portion, equipped with a heat-insulating member, into a shaping mold of which the shaping face is covered with a low heat-conductive member, thereby completing the present invention. More specifically, the present invention provides the following.

In a first aspect of the present invention, a method for producing glass, includes the steps of: flowing a molten glass within a melting furnace into a shaping mold through a flow-out portion; and shaping the molten glass within the shaping mold, in which the temperature distribution of the molten glass is regulated within ±150°C, in the course of cooling to vitrification.

In accordance with the method for producing glass of the first aspect of the present invention, the temperature distribution of the molten glass can be regulated within ±150°C between around the central portion of the upper surface and around the side wall of the molten glass within the shaping mold, in the course of cooling until vitrification.

In a second aspect of the present invention, the method for producing glass according to claim 1, further comprising the steps of: flowing the molten glass through the flow-out portion, between the shaping mold having a shaping face covered with a low heat-conductive member and the lower portion of a heat-insulating member which is movably interlocking with said flow-out portion or fixed to said flow-out portion; and maintaining a fixed distance between said lower portion of the heat-insulating member and the liquid surface of said molten glass flowed into said shaping mold.

In accordance with the method for producing glass of the second aspect of the present invention, the temperature distribution of the molten glass within the shaping mold can be made more uniform in the course of cooling to vitrification by action of the heat-insulating member. In addition, the temperature distribution range of the molten glass within the shaping mold can be further decreased by covering the shaping face of the shaping mold with the low heat-conductive member. Consequently, the temperature distribution range of the molten glass can be regulated within ±150°C between around the central portion of the upper surface and around the side wall of the molten glass within the shaping mold, in the course of cooling until vitrification.

In a third aspect of the method for producing glass according to the first or second aspect of the present invention, the shaping mold is moved up and down in a substantially vertical direction to maintain constant the distance thereof from the liquid surface of the molten glass.

In accordance with the method for producing glass of the third aspect of the present invention, the heat dissipation and the heat stored by the molten glass can be balanced by maintaining constant the distance between the heat-insulating member and the liquid surface of the molten glass within the shaping mold, whereby the temperature distribution range of the molten glass within the shaping mold can be regulated within ±150°C, in the course of cooling until vitrification.

In a fourth aspect of the method for producing glass according to any one of the first to third aspects of the present invention, the molten glass is flowed into the shaping mold while cooling the lower portion of the shaping mold.

In accordance with the method for producing glass of the fourth aspect of the present invention, the molten glass within the shaping mold can be cooled, whereby the molten glass within the shaping mold can be temperature-controlled in the thickness direction.

In a fifth aspect of the method for producing glass according to any one of the first to fourth aspects of the present invention, the distance between the lower portion of the heat-insulating member and the liquid surface of the molten glass flowed into the shaping mold is no more than 50 cm.

In accordance with the method for producing glass of the fifth aspect of the present invention, the distance is maintained between the liquid surface of the molten glass flowed into the shaping mold and the heat-insulating member. Therefore, the molten glass can be prevented from dissipating heat and also store heat, thus the temperature distribution of the molten glass can be regulated within ±150°C between around the central portion and around the side wall within the shaping mold, in the course of cooling until vitrification. The generation of different phased portions (striae) can be decreased during molding by making the temperature distribution range to within ±150°C.

The "temperature distribution between around the central portion and around the side wall within the shaping mold" means the temperature distribution between around the central portion of the upper surface and around the side wall of the molten glass that is being shaped by the shaping mold.

In a sixth aspect of the method for producing glass according to any one of the first to fifth aspects of the present invention, the thickness of the low heat-conductive member is less than 5 mm.

In accordance with the method for producing glass of the sixth aspect of the present invention, the glass can be prevented from devitrification thereof during shaping or cooling the glass.

In a seventh aspect of the method for producing glass according to any one of the first to sixth aspects of the present invention, the heat conductivity at room temperature of the low heat-conductive member is no higher than 2.0 W/m·K.

In accordance with the method for producing glass of the seventh aspect of the present invention, the heat dissipation of the molten glass within the shaping mold can be suppressed, and thus the temperature distribution range of the molten glass within the shaping mold can be regulated within ±150°C between around the central portion and around the side wall, in the course of cooling until vitrification. Breakage, etc. of the shaping mold can be prevented due to the heat stored by the molten glass in relation to the shaping mold.

In an eighth aspect of the method for producing glass according to any one of the first to seventh aspects of the present invention, the low heat-conductive member is of one selected from the group consisting of aluminum oxide and a complex of aluminum oxide.

In a ninth aspect of the method for producing glass according to any one of the first to eighth aspects of the present invention, the heat conductivity at room temperature of the heat-insulating member is no higher than 2.0 W/m·K.

In accordance with the method for producing glass of the ninth aspect of the present invention, the heat of the molten glass can be prevented from dissipating towards the upper portion of the shaping mold, and thus the temperature distribution range of the molten glass within the shaping mold can be regulated within ±150°C between in the vicinity of the central portion and in the vicinity of the side wall, in the course of cooling until vitrification.

In a tenth aspect of the method for producing glass according to any one of first to ninth aspects of the present invention, the heat-insulating member is of one selected from the group consisting of aluminum oxide and a complex of aluminum oxide.

In an eleventh aspect of the present invention, a device for shaping glass includes: a melting furnace to melt glass; a shaping mold to shape molten glass that is flowed into thereof from the melting furnace, in which the inside of the shaping mold is covered with a low heat-conductive member; a heat-insulating member to prevent heat dissipating from the molten glass that is flowed into the shaping mold; and a flow-out portion to flow the molten glass from the melting furnace into the shaping mold.

In accordance with the device for shaping glass of the eleventh aspect of the present invention, the temperature distribution of the molten glass within the shaping mold can be made more uniform in the course of cooling to vitrification by action of the heat-insulating member. In addition, the temperature distribution of the molten glass within the shaping mold can be made more uniform by covering the shaping face (inside) of the shaping mold with the low heat-conductive member. Consequently, the temperature distribution range of the molten glass within the shaping mold can be regulated within ±150°C in the course of cooling until vitrification.

In a twelfth aspect of the present invention, the device for shaping glass according to the eleventh aspect of the present invention, further includes a cooler at the lower portion of the shaping mold.

In accordance with the device for shaping glass of the twelfth aspect of the present invention, the molten glass within the shaping mold can be cooled. Thereby the molten glass within the shaping mold can be temperature-controlled in the thickness direction.

In a thirteenth aspect of the present invention, the device for shaping glass according to the eleventh to twelfth aspect of the present invention is one in which the shaping mold is moved up and down in a substantially vertical direction so as to make constant the distance between the lower portion of the heat-insulating member and the liquid surface of the molten glass flowed into the shaping mold.

In accordance with the device for shaping glass of the thirteenth aspect of the present invention, the distance is made constant between the liquid surface of the molten glass flowed into the shaping mold and the heat-insulating member. Therefore, the molten glass can be prevented from dissipating heat and also store heat, thus the temperature distribution range of the molten glass within the shaping mold can be regulated within ±150°C between around the central portion and around the side wall, in the course of cooling until vitrification.

In a fourteenth aspect of the present invention, the device for shaping glass according to any one of the eleventh to thirteenth aspects of the present invention is one in which the heat-insulating member is fixed to the flow-out portion.

In accordance with the device for shaping glass of the fourteenth aspect of the present invention, the molten glass flowed into the shaping mold moves up and down together with the shaping mold, thereby enabling the distance to always be made constant between the liquid surface of the molten glass flowed into the shaping mold and the heat-insulating member.

In a fifteenth aspect of the present invention, the device for shaping glass according to any one of the eleventh to fourteenth aspects of the present invention is one in which the distance between the lower portion of the heat-insulating member and the liquid surface of the molten glass flowed into the shaping mold is no more than 50 cm.

In accordance with the device for shaping glass of the fifteen aspect of the present invention, the distance is made constant between the liquid surface of the molten glass flowed into the shaping mold and the heat-insulating member. Therefore, the molten glass can be prevented from dissipating heat and also store heat, and thus the temperature distribution range of the molten glass within the shaping mold can be regulated within ±150°C between around the central portion and around the side wall, in the course of cooling until vitrification. In addition, the generation of different phased portions (striae) can be decreased during molding by making the temperature distribution range within ±150°C.

In a sixteenth aspect of the present invention, the device for shaping glass according to any one of the eleventh to fifteen aspects of the present invention is one in which the thickness of the low heat-conductive member is less than 5 mm.

In accordance with the device for shaping glass of the sixteenth aspect of the present invention, the glass can be prevented from devitrification thereof during shaping or cooling the glass.

In a seventeenth aspect of the present invention ,the device for shaping glass according to any one of the eleventh to sixteenth aspects of the present invention is one in which the heat conductivity at room temperature of the low heat-conductive member is no higher than 2.0 W/m·K.

In accordance with the device for shaping glass of seventeenth aspect of the present invention, the molten glass within the shaping mold can be suppressed from dissipating heat dissipation out of the shaping mold, and thus the temperature distribution range of the molten glass within the shaping mold can be regulated within ±150°C between around the central portion and around the side wall. Breakage, etc. of the shaping mold can be prevented due to the heat storage of the shaping mold from the molten glass.

In an eighteenth aspect of the present invention, the device for shaping glass according to any one of the eleventh to seventeenth aspects of the present invention is one in which the low heat-conductive member is of one selected from the group consisting of aluminum oxide and a complex of aluminum oxide.

In a nineteenth aspect of the present invention, the device for shaping glass according to any one of the eleventh to eighteenth aspects of the present invention is one in which the heat conductivity at room temperature of the heat-insulating member is no higher than 2.0 W/m·K.

In accordance with the device for shaping glass of the nineteenth aspect of the present invention, the heat of the molten glass can be prevented from dissipating upward of the shaping mold, and thus the temperature distribution range of the molten glass within the shaping mold can be regulated to within ±150°C between around the central portion and around the side wall, in the course of cooling until vitrification.

In a twentieth aspect of the present invention, the device for shaping glass according to any one of the eleventh to nineteenth aspects of the present invention is one in which the heat-insulating member is of one selected from the group consisting of aluminum oxide and a complex of aluminum oxide.

In accordance with the present invention, the heat dissipation of the molten glass from the upper portion of the shaping mold can be prevented by way of the heat-insulating member and also the molten glass can store heat, and thus the temperature distribution of the molten glass can be made more uniform, in the course of cooling until vitrification. The heat dissipation of the molten glass within the shaping mold can also be prevented by covering the shaping mold with the low heat-conductive member, and thus the heat dissipation of the molten glass within the shaping mold can be prevented, and the temperature distribution range of the molten glass can be made more uniform within the shaping mold. Consequently, the temperature distribution range of the molten glass within the shaping mold can be regulated to within ±150°C between around the central portion and around the side wall, in the course of cooling until vitrification.

### BRIEF DESCRIPTION OF THE DRAWINGS

FIG. 1 shows a cross section of a device for shaping glass according to the present invention.
FIG. 2 shows a perspective view in the vicinity of a shaping mold of a device for shaping glass according to the present invention.
FIG. 3 shows a overhead view in the vicinity of a shaping mold of a device for shaping glass according to the present invention.

### DETAILED DESCRIPTION OF THE INVENTION

The method for producing glass according to the present invention is characterized by including a step of flowing molten glass within a melting furnace from a flow-out portion equipped with a heat-insulating member into a shaping mold covered with a low heat-conductive member, and a step of maintaining the distance between the lower portion of the heat-insulating member and the liquid surface of the molten glass flowed into the shaping mold.

The device for shaping glass according to the present invention is characterized by including a melting furnace to melt glass, a shaping mold to shape molten glass that is flowed therein from the melting furnace, in which the inside of the shaping mold is covered with a low heat-conductive member, a heat-insulating member to prevent the heat dissipation of the molten glass that is flowed into the shaping mold, and a flow-out portion to flow the molten glass from the melting furnace into the shaping mold.

The method for producing glass and the inventive device for shaping glass of the present invention are explained in detail in regards to embodiments thereof, but to which the present invention should not be construed as to be limited, and various modifications may be appropriately conducted within the purpose of the present invention. In addition, in cases where explanations are repeated, sometimes portions of the explanations are omitted, which should not be construed as to limit the scope of the invention. Device for Shaping Glass

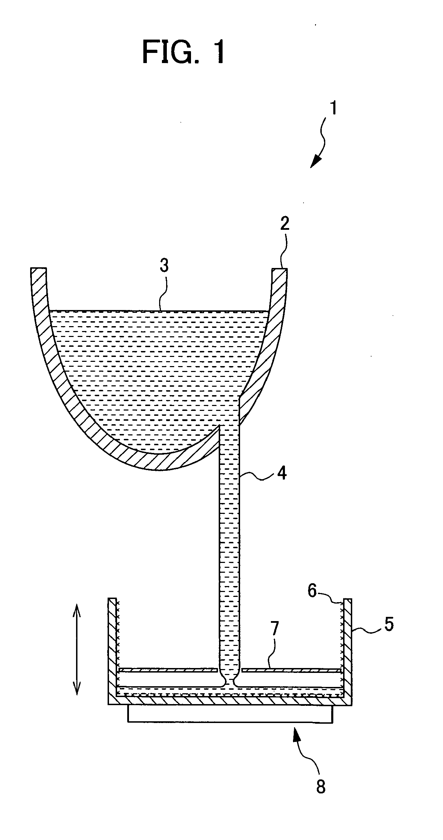

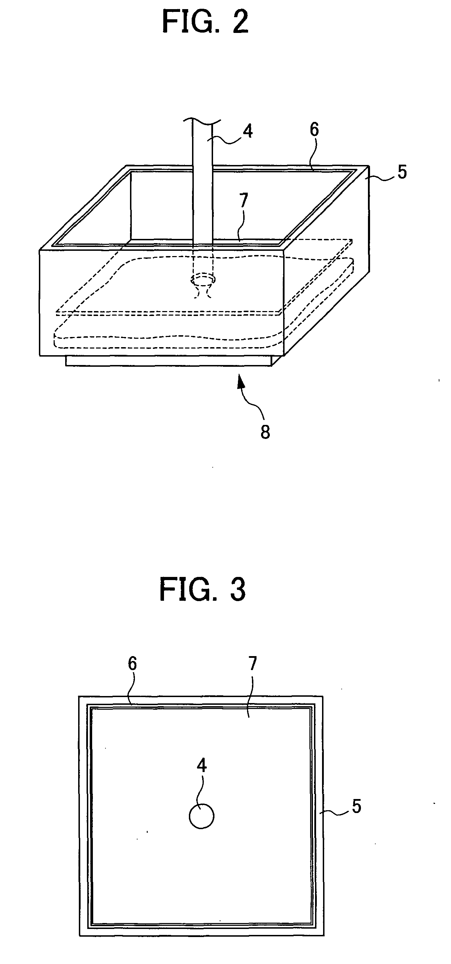

FIG. 1 shows a cross section of device for shaping glass of the present invention; FIG. 2 shows a perspective view that shows the vicinity of shaping mold 5; and FIG. 3 shows a top portion view at the periphery of shaping mold 5. The device for shaping glass 1 is provided with a melting furnace 2 to melt glass materials, and to produce and store a molten glass 3, and a flow-out portion 4 that is connected to the lower portion of the melting furnace 2 and flows the molten glass 3 into the shaping mold 5 to shape the molten glass 3. A cooler 8 is also provided at the lower portion of the shaping mold 5 to cool the molten glass flowed into the shaping mold 5.

The melting furnace 2 may be one that has a heating element (not shown) to generate heat upon energizing, and to supply the heat to the melting furnace 2 and a stirring device (not shown) to stir the molten glass 3 within the melting furnace 2. The melting furnace 2 is preferably a fire-resistant crucible suited to pour, dissolve, clarify and stir the glass raw materials. The fire-resistant crucible is preferably of gold, platinum, platinum alloys, alloys or complex materials thereof, quartz crucible, or electroforming brick, for example.

The flow-out portion 4 is connected to the lower portion of the melting furnace 2 to flow the molten glass 3 within the melting furnace 2 into the shaping mold 5. The connecting site between the melting furnace 2 and flow-out portion 4 is not limited specifically, and, for example, the flow-out portion 4 may be connected to the bottom face, side wall, or the like of the melting furnace 2. The flow-out portion 4 is not required to be a linear shape, and may be appropriately tapered as necessary. The flow-out portion 4 may be directly heated by flowing an electric current through the flow-out portion 4 itself, indirectly heated by an external heating device, or the both may be employed to control the temperature inside the flow-out portion 4.

In cases where the flow-out portion 4 is heated directly, the flow-out portion 4 is constructed from platinum or platinum alloys, etc. so that the flow-out portion 4 is heated by direct energization, and the viscosity of the molten glass flowing within the flow-out portion 4 is adjusted at a predetermined level by controlling the temperature. The flow-out portion 4 shown in FIG. 1 is constructed as an elongated structure, which is not limited, and alternatively may be a gutter-like shape of which the upper portion is open along the direction to which the molten glass flows, for example.

The flow-out portion 4 is equipped with a heat-insulating member 7 that prevents heat dissipating from the molten glass 3 in the shaping mold 5 and stores heat. The heat-insulating member 7 can decrease the temperature distribution range between around the central portion and around the side wall of the molten glass 3 within the shaping mold 5. The area of the heat-insulating member 7 is approximately the same with the opening area of the shaping mold 5, as shown in FIG. 3. The heat dissipation of the molten glass 3 within the shaping mold 5 can be suppressed by making the area of the heat-insulating member 7 approximately the same with the opening area of the shaping mold 5. The site to fix the heat-insulating member 7 may be appropriately changed depending on the shaping mold 5 and size of the flow-out portion 4, etc. The heat-insulating member 7 may be fixed to the flow-out portion 4 or movable together with the flow-out portion 4.

The heat conductivity at room temperature of the heat-insulating member 7 is preferably no higher than 2.0 W/m·K. When the heat conductivity at room temperature is higher than 2.0 W/m·K, it is difficult to sufficiently suppress the heat dissipation from the liquid surface of the molten glass 3 within the shaping mold 5, and thus it is difficult to decrease the temperature difference between the molten glass 3 around the liquid surface of the shaping mold 5 and the molten glass around the central portion of the shaping mold 5. That is, the temperature distribution range cannot be regulated within ±150°C between around the central portion and around the side wall of the molten glass within the shaping mold, in the course of cooling until vitrification. The material of the heat-insulating member 7 is not specifically limited as long as the heat conductivity at room temperature is no higher than 2.0 W/m·K, and, for example, the material is preferably aluminum oxide or complexes of aluminum oxide. The heat-insulating member 7 may be formed of one material or combinations of materials.

In cases where the heat-insulating member 7 is fixed to the flow-out portion 4, the molten glass 3 flowed into the shaping mold 5 from the flow-out portion 4 is flowed between the lower portion of the heat-insulating member 7 and the bottom face of the shaping mold 5.

The shape of the shaping mold 5, which is not specifically limited, may be box-like such as a cube and rectangular solid, as shown in FIGs. 1 and 2. The inner wall face of the shaping mold 5 and the bottom face inside the shaping mold 5 are covered with a low heat-conductive member 6. The molten glass 3 around the side wall of the shaping mold 5 can be easily suppressed from dissipating heat to outside the shaping mold 5 by covering the inner wall face of the shaping mold 5 and the inner bottom face of the shaping mold 5 (hereinafter referred to as "entire inner side of the shaping mold 5"). Breakage, etc. of the shaping mold 5 can also be easily prevented by way of the heat stored in the molten glass 3. Furthermore, the life of the shaping mold 5 can be extended and a thickness thereof decreased by using the low heat-conductive member 6, which also makes it possible to decrease the cost.

The heat conductivity at room temperature of the low heat-conductive member 6 is preferably no higher than 2.0 W/m·K. When the heat conductivity at room temperature is higher than 2.0 W/m·K, it is difficult to suppress the heat dissipation from the molten glass 3 around the side wall of the shaping mold 5 to outside the shaping mold 5, and thus it is difficult to decrease the temperature difference between the molten glass around the central portion of the shaping mold 5 and the molten glass around the side wall of the shaping mold 5. That is, the temperature distribution range cannot be regulated within ±150°C between around the central portion and around the side wall of the molten glass 3 in the shaping mold, in the course of cooling until vitrification. The material of the low heat-conductive member 6 is not limited specifically as long as the heat conductivity at room temperature is no higher than 2.0 W/m·K, and, for example, the material is preferably aluminum oxide or complexes of aluminum oxide. The low heat-conductive member may be formed of one material or combinations of materials.

The thickness of the low heat-conductive member 6 is preferably below 5 mm, and more preferably below 3 mm. When the thickness of the low heat-conductive member 6 is no less than 5 mm, the molten glass 3 may devitrify during its shaping within the shaping mold 5.

The shaping mold 5 has such a configuration that it moves up and down in a substantially vertical direction when the molten glass 3 is flowed into the shaping mold 5, as shown in FIG. 1. Therefore, the distance between the heat-insulating member 7 and the liquid surface of the molten glass 3 within the shaping mold 5 can always be maintained constant. The heat dissipation and the heat stored by the molten glass 3 can be balanced by maintaining constant the distance between the heat-insulating member 7 and the liquid surface of the molten glass 3 within the shaping mold 5, and thus the temperature distribution range can be regulated within ±150°C between around the central portion and around the side wall of the molten glass 3 in the shaping mold, in the course of cooling until vitrification, and mold striae can be reduced. The process to move up and down the shaping mold 5 in a substantially vertical direction may be appropriately modified depending on the size of the molded glass, etc.; for example, the up and down motion of the shaping mold 5 may be controlled such that the shaping mold 5 comes down at a constant speed by means of measuring the flow-out amount of the molten glass 3 introduced. The control may be carried out by projecting a laser to the molten glass 3.

The distance between the heat-insulating member 7 and the liquid surface of the molten glass 3 within the shaping mold 5 may be properly changed depending on the size of the molded glass, etc., the distance being preferably no more than 50 cm. When the distance between the heat-insulating member 7 and the liquid surface of the molten glass 3 within the shaping mold 5 is more than 50 cm, it is difficult to suppress the heat dissipation from the liquid surface of the molten glass 3 within the shaping mold 5, sometimes resulting in cracking of the glass in the steps of heat treatment or processing.

A cooler 8 is provided at the outer bottom of the shaping mold 5. The molten glass 3 around the bottom face of the shaping mold 5 dissipates no substantial heat and easily stores heat compared to upper portions. Therefore, the temperature distribution range of the molten glass 3 can be decreased between the molten glass 3 around the central bottom face of the shaping mold 5, the molten glass 3 around the side wall of the shaping mold 5, and the molten glass 3 around the central portion, by way of cooling the bottom portion of the shaping mold 5. That is, the temperature distribution range can be regulated within ±150°C. The cooler 8 may be provided at the side wall of the shaping mold 5 as required.

The temperature distribution range is preferably within ±150°C between around the central portion and around the side wall of the molten glass 3 within the shaping mold 5, more preferably within ±100°C, and still more preferably within ±50°C.

### Method for Producing Glass

The method for producing glass of the present invention may be carried out using the glass molding device of the present invention described above.

Initially, the molten glass 3 within the melting furnace 2 is flowed into the shaping mold 5, which is covered with the low heat-conductive member 6, under the heat-insulating member 7 through inside the flow-out portion 4 to which the heat-insulating member 7 is fixed to prevent heat dissipating from the molten glass 3.

The flow-out portion 4 is connected to the lower portion of the melting furnace 2 to flow the molten glass 3 within the melting furnace 2 into the shaping mold 5. The velocity of flow of the molten glass 3 into the melting furnace 2 may be properly adjusted depending on the species, etc. of the glass to be produced, with the velocity preferably being less than 50 kg/min. When the velocity of flow of the molten glass 3 is higher than 50 kg/min, the mold striae is likely to be large, sometimes resulting in cracking problems in the steps of heat treatment or processing.

The heat conductivity at room temperature of the heat-insulating member 7 is preferably no higher than 2.0 W/m·K. When the heat conductivity at room temperature is higher than 2.0 W/m·K, it is difficult to sufficiently suppress the heat dissipated from the liquid surface of the molten glass 3 within the shaping mold 5, and thus it is difficult to decrease the temperature difference between the molten glass 3 around the liquid surface of the shaping mold 5 and the molten glass around the central portion of the shaping mold 5. That is, the temperature distribution range cannot be regulated within ±150°C between around the central portion and around the side wall of the molten glass in the shaping mold, in the course of cooling until vitrification. The material of the heat-insulating member 7 is not specifically limited as long as the heat conductivity at room temperature is no higher than 2.0 W/m·K, the material being, for example, preferably aluminum oxide or complexes of aluminum oxide.

The molten glass flowed into the shaping mold 5 from the flow-out portion 4 is directed to flow between the lower portion of the heat-insulating member 7 and the bottom face of the shaping mold 5, since the heat-insulating member 7 is fixed to the flow-out portion 4.

The shape of the shaping mold 5, which is not specifically limited, may be box-like such as a cube and rectangular solid, as shown in FIGs. 1 and 2. The inner wall face of the shaping mold 5 and the bottom face inside the shaping mold 5 are covered with a low heat-conductive member 6. The molten glass 3 around the side wall of the shaping mold 5 can easily be suppressed from dissipating heat to outside the shaping mold 5 by covering the inner wall face of the shaping mold 5 and the inner bottom face of the shaping mold 5 (hereinafter referred to as "entire inner side of the shaping mold 5") with the low heat-conductive member 6. Breakage, etc. of the shaping mold 5 can also be easily prevented by way of the heat storage of the molten glass 3. Furthermore, the life of the shaping mold 5 can be extended and the thickness thereof decreased by using the low heat-conductive member 6, which also makes it possible to decrease the cost.

The heat conductivity at room temperature of the low heat-conductive member 6 is preferably no higher than 2.0 W/m·K. When the heat conductivity at room temperature is higher than 2.0 W/m·K, it is difficult to suppress the heat dissipation from the molten glass 3 around the side wall of the shaping mold 5 to outside the shaping mold 5, and thus it is difficult to uniformly decrease the temperature distribution range between the molten glass 3 around the central portion of the shaping mold 5 and the molten glass around the side wall of the shaping mold 5. That is, it is difficult to regulate the temperature distribution to within ±150°C between around the central portion and around the side wall of the molten glass 3 in the shaping mold, in the course of cooling until vitrification. The material of the low heat-conductive member 6 is not limited specifically as long as the heat conductivity at room temperature is no higher than 2.0 W/m·K, and for example, the material is preferably aluminum oxide or complexes of aluminum oxide.

The thickness of the low heat-conductive member 6 is preferably less than 5 mm, more preferably no more than 3 mm. When the thickness of the low heat-conductive member 6 is no less than 5 mm, the molten glass 3 may devitrify during its shaping within the shaping mold 5.

A cooler 8 is provided at the outer bottom of the shaping mold 5. The molten glass 3 around the bottom portion of the shaping mold 5 dissipates no substantial heat and easily stores heat compared to upper portions. Therefore, the temperature distribution range can be decreased between the molten glass 3 around the bottom face of the shaping mold 5, the molten glass 3 around the side wall of the shaping mold 5, and the molten glass 3 around the central portion, by way of cooling the bottom portion of the shaping mold 5. The cooler 8 may be provided at the side wall of the shaping mold 5 as required.

The cooling process by the cooler 8 may be properly changed depending on the size, etc. of the glass to be produced and, for example, various conventional cooling processes such as mist-cooling, air-cooling, and water-cooling may be employed. These cooling processes may be used alone or in combination of two or more.

The shaping mold 5 is then lowered downward such that the distance is maintained between the lower portion of the heat-insulating member 7 and the liquid surface of the molten glass 3 flowed into the shaping mold 5.

The shaping mold 5 has such a configuration that it moves up and down in a substantially vertical direction when the molten glass 3 is flowed into the shaping mold 5, as shown in FIG. 1. Therefore, the distance between the heat-insulating member 7 and the liquid surface of the molten glass 3 within the shaping mold 5 can always be maintained constant. The heat dissipation and the heat storage of the molten glass 3 can be easily balanced by maintaining constant the distance between the heat-insulating member 7 and the liquid surface of the molten glass 3 within the shaping mold 5, and thus the temperature distribution range can be regulated within ±150°C between around the central portion and around the side wall of the molten glass 3 in the shaping mold in the course of cooling until vitrification, and mold striae can be reduced. The process to move the shaping mold 5 up and down in a substantially vertical direction may be appropriately modified depending on the size of the molded glass, etc.; the up and down motion of the shaping mold 5 may be controlled such that shaping mold 5 comes down at a constant speed by measuring the flow-out amount of the introduced molten glass 3. The control may be carried out by projecting a laser to the molten glass 3.

The distance between the heat-insulating member 7 and the liquid surface of the molten glass 3 within the shaping mold 5 may be properly selected depending on the size of the glass to be molded, etc., and the distance is preferably no more than 50 cm. When the distance between the heat-insulating member 7 and the liquid surface of the molten glass 3 within the shaping mold 5 is more than 50 cm, it is difficult to suppress the heat dissipated from the liquid surface of the molten glass 3 within the shaping mold 5, and it is difficult to balance the heat dissipated and the heat stored. Furthermore, the mold striae is likely to be large, sometimes resulting in cracking of glass during the steps of heat treatment or processing.

An intended amount of the molten glass 3 is flowed into the shaping mold 5 while lowering the shaping mold 5 downward such that the distance is maintained constant between the lower portion of the heat-insulating member 7 and the liquid surface of the molten glass 3 flowed into the shaping mold 5, then the lowering of the shaping mold 5 is stopped, and the molten glass 3 is shaped.

## Claims

1. A method for producing glass, comprising steps of:
flowing a molten glass within a melting furnace into a shaping mold through a flow-out portion, and
shaping the molten glass within the shaping mold,
wherein the temperature distribution of the molten glass is regulated within ±150°C, in the course of cooling until vitrification.

2. The method for producing glass according to claim 1, further comprising the steps of:
flowing the molten glass through the flow-out portion, between the shaping mold having a shaping face covered with a low heat-conductive member and the lower portion of a heat-insulating member which is movably interlocking with said flow-out portion or fixed to said flow-out portion; and
maintaining a fixed distance between said lower portion of the heat-insulating member and the liquid surface of said molten glass flowed into said shaping mold.

3. The method for producing glass according to claim 1 or 2, wherein the shaping mold is moved up and down in a vertical direction to maintain constant the distance thereof from the liquid surface of the molten glass.

4. The method for producing glass any one of claims 1 to 3, wherein the molten glass is flowed into the shaping mold while cooling the lower portion of the shaping mold.

5. The method for producing glass any one of claims 1 to 4, wherein the distance between the lower portion of the heat-insulating member and the liquid surface of the molten glass flowed into the shaping mold is no more than 50 cm.

6. The method for producing glass any one of claims 1 to 5, wherein the thickness of the low heat-conductive member is less than 5 mm.

7. The method for producing glass any one of claims 1 to 6, wherein the heat conductivity at room temperature of the low heat-conductive member is no higher than 2.0 W/m·K.

8. The method for producing glass any one of claims 1 to 7, wherein the low heat-conductive member is of one selected from the group consisting of aluminum oxide and a complex of aluminum oxide.

9. The method for producing glass any one of claims 1 to 8, wherein the heat conductivity at room temperature of the heat-insulating member is no higher than 2.0 W/m·K.

10. The method for producing glass any one of claims 1 to 9, wherein the heat-insulating member is of one selected from the group consisting of aluminum oxide and a complex of aluminum oxide.

11. A device for shaping glass, comprising:
a melting furnace to melt glass;
a shaping mold to shape molten glass that is flowed therein from the melting furnace, wherein the inside of the shaping mold is covered with a low heat-conductive member;
a heat-insulating member to prevent the heat dissipation of the molten glass that is flowed into the shaping mold; and
a flow-out portion to flow the molten glass from the melting furnace into the shaping mold.

12. The device for shaping glass according to claim 11, further comprising a cooler at the lower portion of the shaping mold.

13. The device for shaping glass according to claim 11 or 12, wherein the shaping mold is moved up and down in a substantially vertical direction so as to make the distance between the lower portion of the heat-insulating member and the liquid surface of the molten glass flowed into the shaping mold constant.

14. The device for shaping glass any one of claims 1 to 13, wherein the heat-insulating member is fixed to the flow-out portion.

15. The device for shaping glass any one of claims 1 to 14, wherein the distance between the lower portion of the heat-insulating member and the liquid surface of the molten glass flowed into the shaping mold is no more than 50 cm.

16. The device for shaping glass any one of claims 1 to 15, wherein the thickness of the low heat-conductive member is less than 5 mm.

17. The device for shaping glass any one of claims 1 to 16, wherein the heat conductivity at room temperature of the low heat-conductive member is no higher than 2.0 W/m·K.

18. The device for shaping glass any one of claims 1 to 17, wherein the low heat-conductive member is of one selected from the group consisting of aluminum oxide and a complex of aluminum oxide.

19. The device for shaping glass any one of claims 1 to 18, wherein the heat conductivity at room temperature of the heat-insulating member is no higher than 2.0 W/m·K.

20. The device for shaping glass any one of claims 1 to 19, wherein the heat-insulating member is of one selected from the group consisting of aluminum oxide and a complex of aluminum oxide.
